# EUROPEAN PATENT SPECIFICATION

(11) **EP 3 200 560 B1**
(45) Date of publication and mention of the grant of the patent: **24.06.2020**
(21) Application number: 17153521.4
(22) Date of filing: 27.01.2017
(51) Int. Cl.: H05B 6/12, H05B 6/06

(54) **INDUCTION COOKING APPARATUS**
INDUKTIONSKOCHVORRICHTUNG
APPAREIL DE CUISSON À INDUCTION

(30) Priority: 29.01.2016 KR 20160011705
(43) Date of publication of application: 02.08.2017
(73) Proprietor: LG ELECTRONICS INC., Yeongdeungpo-gu Seoul, 07336 (KR)
(72) Inventor: HEO, Jeashik, 08592 Seoul (KR); KANG, Kyelyong, 08592 Seoul (KR); HAN, Jinwook, 08592 Seoul (KR); SON, Changwoo, 08592 Seoul (KR)
(74) Representative: Vossius & Partner Patentanwälte Rechtsanwälte mbB

(56) References cited:
- EP-A1- 0 412 875
- WO-A1-2013/134239
- JP-A- 2010 257 959

## Description

The present invention relates to an induction cooking apparatus, and, more particularly, to an induction cooking apparatus capable of conveniently detecting the temperature of a cooking vessel.

As cooking apparatuses, various products such as a microwave oven using microwaves, an oven using a heater and a cooktop are widely used.

The microwave oven radiates microwaves generated by a magnetron in an enclosed cooking chamber and vibrates water molecules of food put into the cooking chamber to heat food, and the oven heats an enclosed cooking chamber using the heater to heat food put into the cooking chamber.

The cooktop heats a vessel laid thereon to heat food contained in the vessel and a representative example thereof includes a gas cooktop using gas as a heating source. In the gas cooktop, since heat loss is high due to flame, thermal efficiency deteriorates. Therefore, recently, a cooktop using electricity is attracting attention.

JP 2010 257959 A discloses an induction heater according to the preamble of claim 1.

Therefore, the present invention has been made in view of the above problems, and it is an object of the present invention to provide an induction cooking apparatus capable of conveniently detecting the temperature of a cooking vessel. This object is achieved with the features of the claims.

The above and other objects, features and other advantages of the present invention will be more clearly understood from the following detailed description taken in conjunction with the accompanying drawings, in which:
FIG. 1 is a perspective view of an induction cooking apparatus according to an embodiment of the present invention;
FIG. 2 is a block diagram showing an example of the induction cooking apparatus of FIG. 1;
FIG. 3 is a diagram showing an example of supplying power to the induction cooking apparatus of FIG. 1;
FIG. 4 is a circuit diagram showing an example of the induction cooking apparatus of FIG. 3;
FIG. 5 is a side view showing an example of the induction cooking apparatus according to an embodiment of the present invention;
FIGS. 6A to 8B views referred to for describing operation of the induction cooking apparatus of FIG. 5; and
FIG. 9 is a side view of an induction cooking apparatus according to another embodiment of the present invention.

Exemplary embodiments of the present invention will be described below in detail with reference to the accompanying drawings.

The terms "module" and "unit" attached to describe the names of components are used herein to aid in the understanding of the components and thus should not be considered as having specific meanings or roles. Accordingly, the terms "module" and "unit" may be used interchangeably.

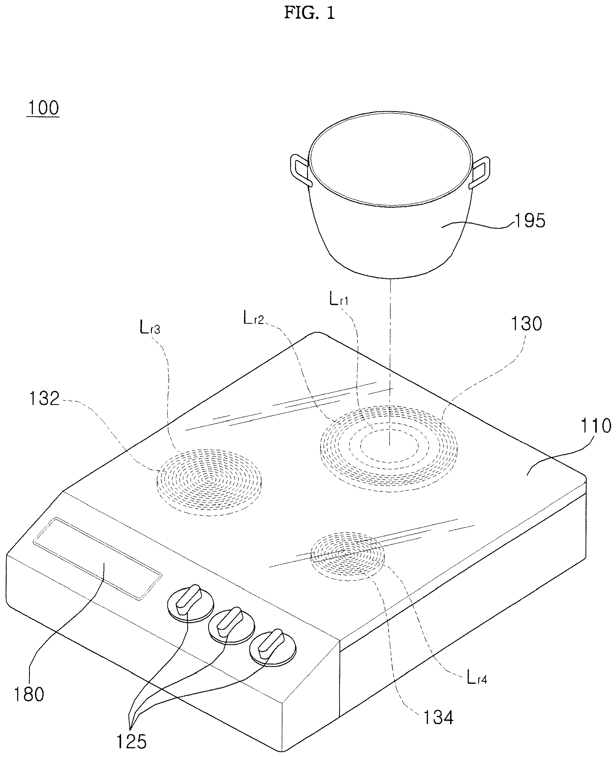

FIG. 1 is a perspective view of an induction cooking apparatus according to an embodiment of the present invention.

Referring to FIG. 1, the induction cooking apparatus 100 according to the embodiment of the present invention may include a heating plate 110, a first heater 130, a second heater 132, a third heater 134, an input unit 125 and a display 180.

The heating plate 110 is a casing of the induction cooking apparatus 100 and is disposed on the heaters. The heating plate 110 may be made of various materials such as ceramic or tempered glass.

A cooking vessel is disposed on the heating plate 110 and the cooking vessel 195 is placed on at least one of the heaters 130, 132 and 134 and is heated by the principle of induction heating.

The first heater 130 includes a plurality of induction heating coils and a resonance capacitor (not shown).

In the figure, the first heater 130 includes a first coil Lᵣ₁ and a second coil Lᵣ₂.

The first coil Lᵣ₁ may be an induction heating coil used to detect the temperature of the cooking vessel and the second induction heating coil Lᵣ₂ may be used to heat the cooking vessel.

In the figure, the second induction heating coil Lᵣ₂ is disposed at the outer circumference of the first induction heating coil Lᵣ₁.

When AC current, more particularly, high-frequency AC current, flows in the second induction heating coil Lᵣ₂ in a state in which the cooking vessel 195 is placed on the first heater 130, more particularly, the second induction heating coil Lᵣ₂, a magnetic field is generated in the second induction heating coil Lᵣ₂ by resonance by the resonance capacitor (not shown) and the second induction heating coil Lᵣ₂ and eddy current is induced in the cooking vessel 195 due to electromagnetic induction effect of the magnetic field. By the eddy current, Joule heat is generated in a resistance component of the cooking vessel 195, thereby heating the cooking vessel.

The second heater 132 includes a third induction heating coil Lᵣ₃ and a resonance capacitor (not shown). When high-frequency AC current flows in the third induction heating coil Lᵣ₃ in a state in which the cooking vessel 195 is placed on the second heater 132, more particularly, the third induction heating coil Lᵣ₃, the cooking vessel 195 is heated by eddy current as described above.

The third heater 134 includes a fourth induction heating coil Lᵣ₄ and a resonance capacitor (not shown). When high-frequency AC current flows in the fourth induction heating coil Lᵣ₄ in a state in which the cooking vessel 195 is placed on the third heater 134, more particularly, the fourth induction heating coil Lᵣ₄, the cooking vessel 195 is heated by eddy current as described above.

The input unit 125 receives user input so as to operate the induction cooking apparatus 100. For example, whether at least one of the first heater 130, the second heater 132 and the third heater 134 is heated or to which of the first induction heating coil Lᵣ₁ and the second induction heating coil Lᵣ₂ of the first heater 130 current is supplied is determined or the operation time or temperature of each heater is selected by user input.

The input unit 125 is disposed in each of the heaters 130, 132 and 134 as shown in the figure.

The display 180 displays the operation state of the induction cooking apparatus 100. Whether each of the heaters 130, 132 and 134 operates or the temperature of the cooking vessel 195 which is being heated is displayed.

In addition to the induction heat cooking apparatus 100 according to the embodiment of the present invention, since a radiant heat cooking apparatus uses a heater under a heating plate 110 similarly to the induction cooking apparatus 100, flame is not generated and thus stability is high. However, since the temperature of the heater increases by radiant heat, on/off control is necessary to protect the heater.

However, since the induction cooking apparatus 100 according to the embodiment of the present invention uses the principle of high-frequency induction heating, the heater, more particularly, the induction heating coil, is not directly heated. Since high-frequency current may be continuously supplied, high energy efficiency can be obtained and a heating time can be reduced.

Since the induction cooking apparatus 100 efficiently performs induction heating even in a cooking vessel made of a magnetic material including a metal component, an electrothermal heater (not shown) may be further included in order to heat a cooking vessel made of a non-magnetic material. The electrothermal heater (not shown) may be placed in at least one of the heaters 130, 132 and 134. The induction cooking apparatus 100 may further include a load detector (not shown) for detecting the type of the cooking vessel.

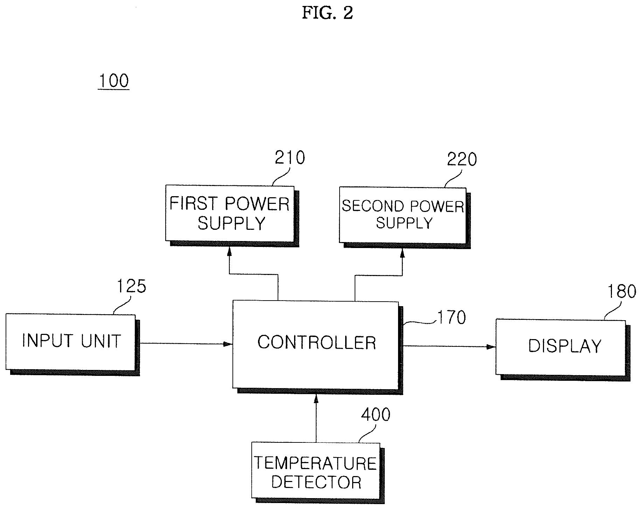

FIG. 2 is a block diagram showing an example of the induction cooking apparatus of FIG. 1.

Referring to the figure, the induction cooking apparatus 100 may include a first power supply 210, a second power supply 220, an input unit 125, a display 180 and a temperature detector 400.

The first power supply 210 and the second power supply 220 may supply power to the plurality of induction heating coils of the cooking apparatus 100.

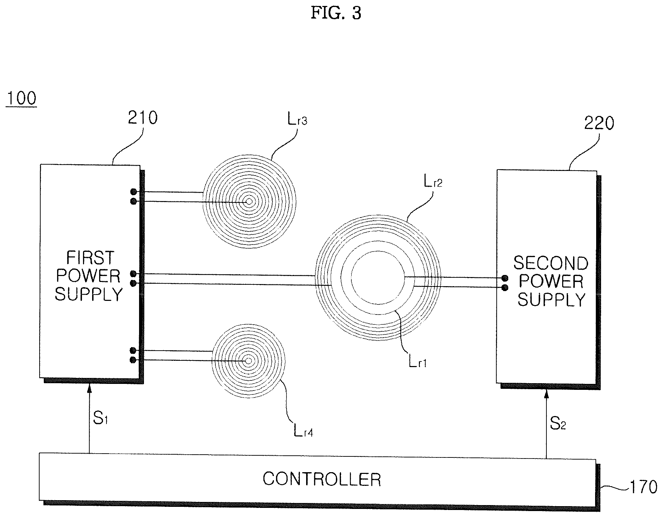

In FIG. 3, the first power supply 210 supplies power to a second induction heating coil Lᵣ₂, a third induction heating coil Lᵣ₃ and a fourth induction heating coil Lᵣ₄ and the second power supply 220 supplies power to a first induction heating coil Lᵣ₁.

The input unit 125 may include buttons and a touchscreen related to operation of the cooking apparatus 100 and a signal input through the input unit 125 may be transmitted to the controller 170.

The display 180 may display information related to the operation state of the cooking apparatus 100. For example, a cooking time, a residual time, cooking type information and the temperature of a cooking vessel related to cooking may be displayed.

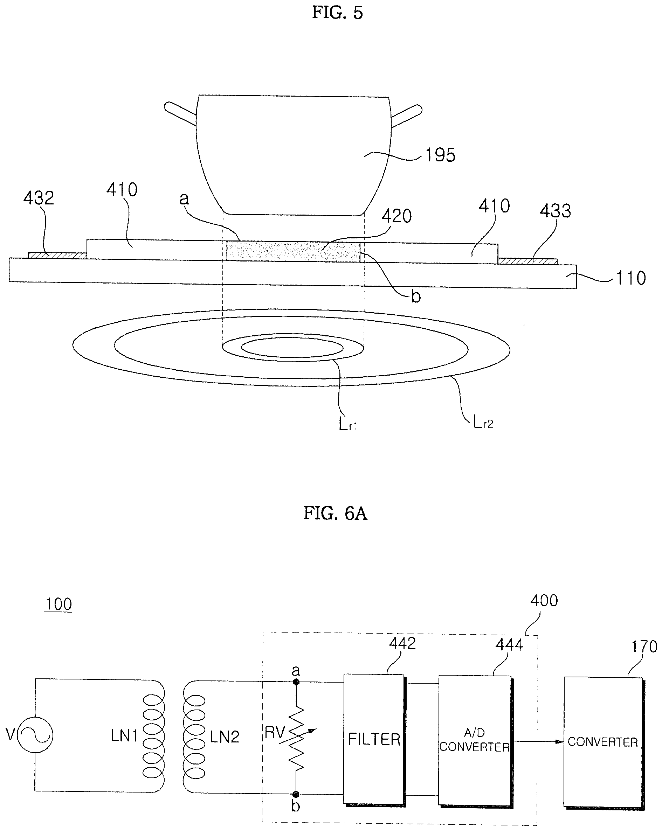

The temperature detector 400 may detect the temperature of the cooking vessel 195. For temperature detection, an IR sensor is generally used. However, in the present invention, a method of using a resistor element having a resistance value changed according to temperature is proposed, in consideration of convenience and manufacturing cost reduction. Arrangement of a resistor element will be described with reference to FIG. 5 and subsequent figures thereof.

The controller 170 controls overall operation of the cooking apparatus 100.

For example, the controller 170 may control operations of the first power supply 210, the second power supply 220, the input unit 125, the display 180 and the temperature detector 400.

More specifically, the controller may control the first power supply 210 or the second power supply 220 in order to cook food according to a temperature signal input through the input unit 125.

The controller 170 may receive temperature information detected by the temperature detector 400 and perform control to display the temperature information on the display 180.

The controller 170 performs control to apply a pulse signal to the first coil Lᵣ₁ and detects the temperature of the cooking vessel 195 based on current flowing in the resistor element in correspondence with the pulse signal.

The controller 170 performs control to continuously operate the second coil Lᵣ₂ and to repeatedly apply the pulse signal to the first coil Lᵣ₁, upon heating the cooking vessel 195.

The controller 170 may perform control to change the width of the pulse signal of the first coil Lᵣ₁ or the time for applying the pulse signal according to the operation time of the second coil Lᵣ₂ or temperature of the cooking vessel 195.

FIG. 3 is a diagram showing an example of supplying power to the induction cooking apparatus of FIG. 1.

Referring to FIG. 3, the induction cooking apparatus 100 may further include a first power supply 210 and a second power supply 220.

The first power supply 210 may supply power to a second induction heating coil Lᵣ₂ of the first heater 130, a third induction heating coil Lᵣ₃ of the second heater 132 and a fourth induction heating coil Lᵣ₄ of the third header 134. Here, power may be high-frequency AC power.

The second power supply 220 may supply power to the first induction heating coil Lᵣ₁ of the first heater 130.

Power is supplied from different power supplies to the induction heating coils of the first heater 130, in which the plurality of induction heating coils is disposed, such that the induction cooking apparatus using the high-frequency AC current can be efficiently and stably driven without power reduction.

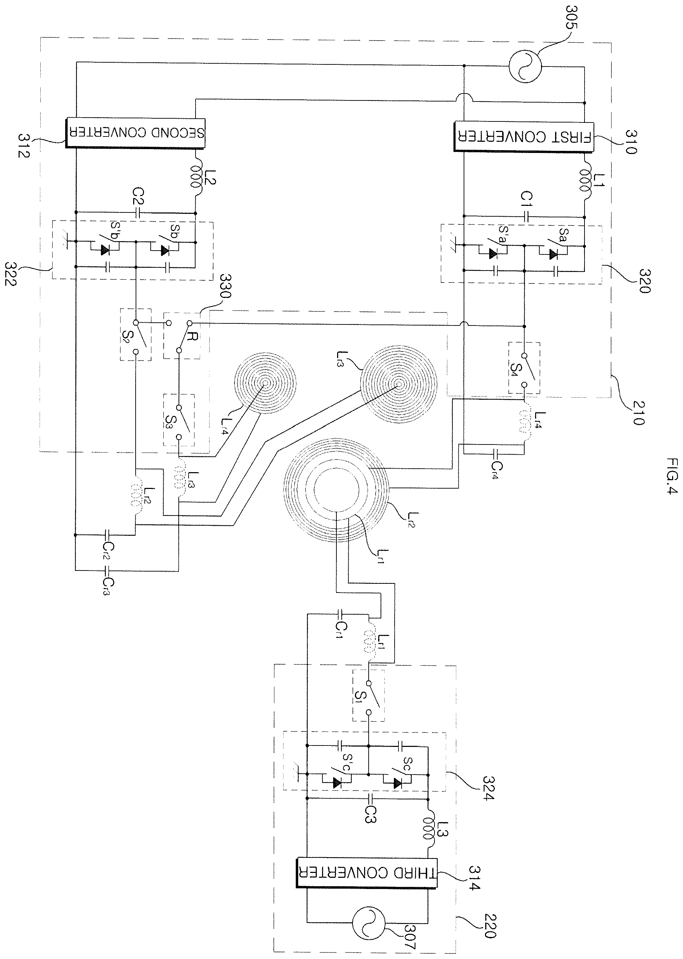

FIG. 4 is a circuit diagram showing an example of the induction cooking apparatus of FIG. 3.

Referring to the figure, the first power supply 210 according to the embodiment of the present invention may include a first converter 310, a second converter 312, a first reactor L1, a second reactor L2, a first smoothing capacitor C1, a second smoothing capacitor C2, a first inverter 320, a second inverter 322, a power selector 330 and second to fourth switching elements S2 to S4.

The second power supply 220 may include a third converter 314, a third reactor L3, a third smoothing capacitor C3, a third inverter 324 and a first switching element S1.

The first converter 310 and the second converter 312 receive and convert voltages from a commercial AC power source 305 into DC voltages, respectively. For example, the first converter 310 and the second converter 312 may respectively include diodes to output the DC voltages rectified by the diodes.

The first converter 310 and the second converter 312 may respectively include diodes and switching elements and output DC voltages converted according to the rectification characteristics of the diodes and the switching operations of the switching elements.

Hereinafter, the first converter 310 and the second converter 312 respectively including the diodes without the switching elements will be focused upon.

The commercial AC power source 305 may be a single-phase AC power source or a three-phase AC power source. In a single-phase AC power source, the first converter 310 and the second converter 312 may include four diodes in the form of a bridge. In a three-phase AC power source, the first converter 310 and the second converter 312 may include six diodes.

The third converter 314 receives and converts the commercial AC voltage into a DC voltage, as in the first converter 310 and the second converter 312. In order to prevent power reduction, the third converter 314 may receive a voltage from a separate commercial AC power 307.

The first reactor L1 and the second reactor L2 are respectively connected to one end of each of the first converter 310 and the second converter 312 to serve to accumulate energy of an AC component to eliminate a harmonic current component or a noise component.

The third reactor L3 is connected to one end of the third converter 314 to serve to accumulate energy of an AC component to eliminate a harmonic current component or a noise component.

The first smoothing capacitor C1 and the second smoothing capacitor C2 are respectively connected to output terminals of the first converter 310 and the second converter 312. In the figure, the reactors L1 and L2 are disposed between the capacitors and the converters 310 and 315.

The first smoothing capacitor C1 and the second smoothing capacitor C2 smooth the rectified voltages output from the first converter 310 and the second converter 312 into DC voltages. Hereinafter, the output terminals of the first converter 310 and the second converter 312 are referred to as first and second dc ends, respectively. The smoothed DC voltages of the first and second dc ends are applied to the first converter 310 and the second converter 312, respectively.

The third capacitor C3 is connected to the output terminal of the third converter 314 and smooths the rectified voltage output from the third converter 312 into a DC voltage. The output terminal of the third converter is referred to as a third dc end.

Each of the first inverter 320, the second inverter 322 and the third inverter 324 includes a plurality of switching elements and converts the smoothed DC voltage into an AC voltage having a predetermined frequency by on/off operation of the switching elements.

The first inverter 320 includes an upper arm switching element Sa and a lower arm switching element S'a connected in series. A diode is connected in anti-parallel to each switching element Sb or S'b. In addition, a snubber capacitor is connected to each switching element Sa or S'a in parallel.

The switching elements Sa and S'a of the first inverter 320 perform on/off operation based on a first switching control signal from a controller (not shown). At this time, the switching elements Sa and S'a may complementarily operate.

The second inverter 322 includes an upper arm switching element Sb and a lower arm switching element S'b connected in series, similarly to the first inverter 320. A diode is connected in anti-parallel to each switching elements Sb or S'b. In addition, a snubber capacitor is connected to each switching element Sb or S'b in parallel.

The switching elements Sb and S'b of the first inverter 320 perform on/off operation based on a second switching control signal from the controller (not shown).

The first inverter 320 and the second inverter 322 may separately perform operation. That is, the first and second inverter may generate and output first and second high-frequency AC voltages, respectively.

The third inverter 324 includes an upper arm switching element Sc and a lower arm switching element S'c connected in series, similarly to the first inverter 320. In addition, a diode and a snubber capacitor are further connected.

The fourth resonance capacitor Cᵣ₄ may be connected to the second induction heating coil Lᵣ₂, for resonance. The high-frequency AC voltage may be supplied to the second induction heating coil Lᵣ₂ to induce heating according to the principle of induction heating. At this time, a switching element S4 for determining operation of the second induction heating coil Lᵣ₂ may be connected to the second induction heating coil Lᵣ₂.

A first AC voltage is supplied from the first inverter 320 to the second induction heating coil Lᵣ₂.

The third induction heating coil Lᵣ₃ and the fourth induction heating coil Lᵣ₄ are connected in parallel to form a pair. A second resonance capacitor Cᵣ₂ and a third resonance capacitor Cᵣ₃ may be connected to the third induction heating coil Lᵣ₃ and the fourth induction heating coil Lᵣ₄, for resonance. High-frequency AC voltages may be supplied to the induction heating coils Lᵣ₂ and Lᵣ₃ to induce heating according to the principle of induction heating. At this time, switching elements S2 and S3 for determining operation of the induction heating coils Lᵣ₂ and Lᵣ₃ may be connected to the third induction heating coil Lᵣ₃ and the fourth induction heating coil Lᵣ₄, respectively.

A first AC voltage from the first inverter 320 or a second AC voltage from the second inverter is supplied to the third induction heating coil Lᵣ₃ and the fourth induction heating coil Lᵣ₄. To this end, the power selector 330 performs switching operation.

The voltage selector 330 selects and supplies any one of the first AC voltage from the first inverter 320 and the second AC voltage from the second inverter 322 to the third induction heating coil Lᵣ₃ and supplies the other to the fourth induction heating coil Lᵣ₄, when both the third induction heating coil Lᵣ₃ and the second induction heating coil Lᵣ₂ operate.

For example, the second AC voltage may be supplied to the third induction heating coil Lᵣ₃ and the first AC voltage may be supplied to the fourth induction heating coil Lᵣ₄.

When three or more of the plurality of induction heating coils connected to the same inverter in parallel are turned on, the AC voltages applied to the induction heating coils may be separated. That is, AC voltages may be supplied from different inverters. Therefore, since the same inverter does not supply the same AC voltage, power reduction does not occur and the AC voltages can be stably supplied.

To this end, the power selector 330 may include a relay element. In the figure, the relay element R is included.

The relay element R is disposed between the inverters 320 and 322 and the fourth induction heating coil Lᵣ₄ to perform relay operation, such that the fourth induction heating coil Lᵣ₄ is connected to any one of the first inverter 320 and the second inverter 322.

Relay operation of the relay element R may be controlled by a control signal of a controller (not shown).

The first resonance capacitor Cᵣ₁ may be connected to the first induction heating coil Lᵣ₁, for resonance. A high-frequency AC voltage may be supplied to the first induction heating coil Lᵣ₁ to induce heating according to the principle of induction heating. At this time, the switching element S1 for determining operation of the first induction heating coil Lᵣ₁ may be connected to first induction heating coil Lᵣ₁.

A third AC voltage from the third inverter 324 is supplied to the first induction heating coil Lᵣ₁.

The controller (not shown) may control operation of the switching elements Sa and S'a of the first inverter 320, the switching elements Sb and S'b of the second inverter 322, the switching elements Sc and S'c of the third inverter 324, the relay element R of the power selector 330 and the first to fourth switching elements S1 to S4 for operation of the induction heating coils.

In particular, for control of the first inverter 320, the second inverter 322 and the third inverter 324, a pulse width modulation (PWM) switching control signal may be output. When the switching elements of the first inverter 320, the second inverter 322 and the third inverter 324 are insulated gate bipolar transistors (IGBTs), PWM gate drive control signals may be output.

The controller (not shown) may receive respective values from a temperature sensor (not shown) for sensing the temperature of the vicinity of each induction heating coil and an input current detector (not shown) for detecting input current from the commercial AC voltage, and stop overall operation of the induction cooking apparatus 100 upon abnormal operation.

FIG. 5 is a side view showing an example of the induction cooking apparatus according to an embodiment of the present invention, and FIGS. 6A to 8B views referred to for describing operation of the induction cooking apparatus of FIG. 5.

Referring to FIG. 5, the induction cooking apparatus 100 according to the embodiment of the present invention may include a plate 110, a first coil Lᵣ₁ disposed under the plate 110, a second coil Lᵣ₂ disposed under the plate 110 and around the first coil Lᵣ₁, and a temperature detector 400 disposed on the plate 110 and including a resistor element 420 having a resistance value changed according to the temperature of the cooking vessel 195 induction-heated by the second coil Lᵣ₂.

The induction cooking apparatus 100 according to the embodiment of the present invention may further include a metal member 410 disposed on the plate 110.

The resistor element 420 or Rᵥ may be electrically connected to the metal member 410.

The resistor element 420 or Rᵥ may be disposed at a position corresponding to the first coil Lᵣ₁.

The resistor element 420 or Rᵥ may include an element having a resistance value changed according to temperature. For example, the resistor element 420 or Rᵥ may include a negative temperature coefficient (NTC) thermistor or a positive temperature coefficient (PTC) thermistor.

Hereinafter, assume that the resistor element 420 or Rᵥ include the NTC thermistor.

The plate 110 may be an insulation plate and the metal member 410 may be an AL plate.

The resistor element 420 or Rᵥ may be disposed between two metal members 410 and the cooking vessel 195 may be disposed on the resistor element 420 or Rᵥ.

For temperature detection using the resistor element 420 or Rᵥ, conductive lines 432 and 433 may be connected to both ends of the two metal members 410 to be electrically connected to a filter 442 shown in FIG. 6A.

Referring to FIG. 5, the cooking vessel is actually heated by the second coil Lᵣ₂ disposed at the outer circumference of the first coil Lᵣ₁ and the first coil Lᵣ₁ may intermittently operate in order to sense the temperature of the cooking vessel 195.

The size of the first coil Lᵣ₁ may be similar to that of the cooking vessel.

At this time, both the first coil Lᵣ₁ and the second coil Lᵣ₂ are insulated from the cooking vessel 195 by the plate 110 but operate by induction current.

FIGS. 6A to 6B show an equivalent circuit formed by the first coil Lᵣ₁ when induction current is generated by the first coil Lᵣ₁.

First, referring to FIG. 6A, when induction current is generated by the first coil Lᵣ₁, the first coil Lᵣ₁ may be expressed by LN1 and LN2 and both ends (nodes a and b) of a secondary coil LN2 may be connected to the resistor element 420 or Rᵥ of the temperature detector 400.

The temperature detector 400 may include a resistor element 420 or Rᵥ, a filter 442 and a converter 444.

The filter 442 may be electrically connected to the resistor element 420 or Rᵥ to filter current flowing in the resistor element 420 or Rᵥ.

Current flowing in the resistor element 420 or Rᵥ may correspond to current flowing in the first coil Lᵣ₁.

The converter 444 is an analog/digital (A/D) converter to convert the current value filtered by the filter 442 into a digital signal.

The current value converted into the digital signal is transmitted to the controller 170 and the controller 170 may calculate the temperature of the cooking vessel 195 based on the current value converted into the digital signal.

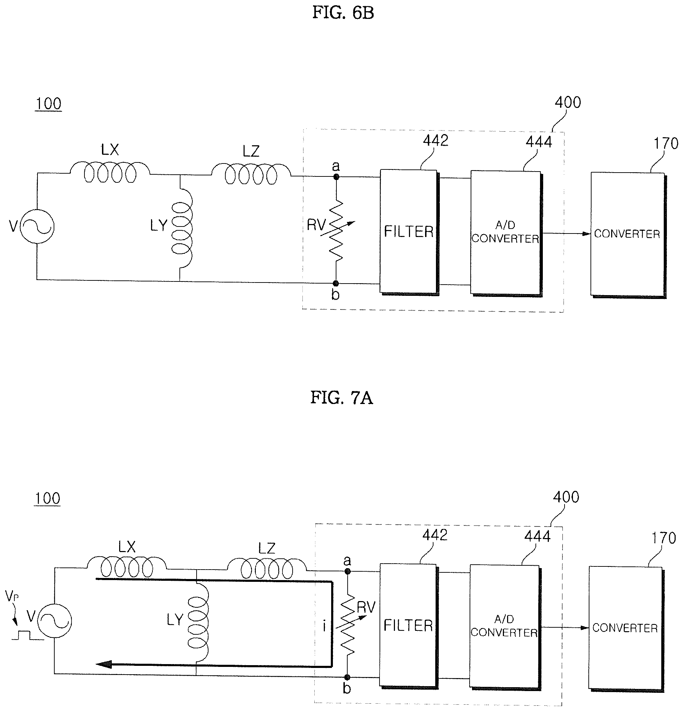

FIG. 6B shows T-shaped inductors LX, LY and LZ which are equivalent to the primary coil LN1 and the secondary coil LN2 of FIG. 6A.

Hereinafter, current flow when a pulse signal is applied to the first coil Lᵣ₁ based on the circuit of FIG. 6B will be described.

In FIG. 7A, when a pulse signal Vₚ is applied to the first coil Lᵣ₁, current i may flow through the inductors LX and LZ and the resistor element 420 or Rᵥ.

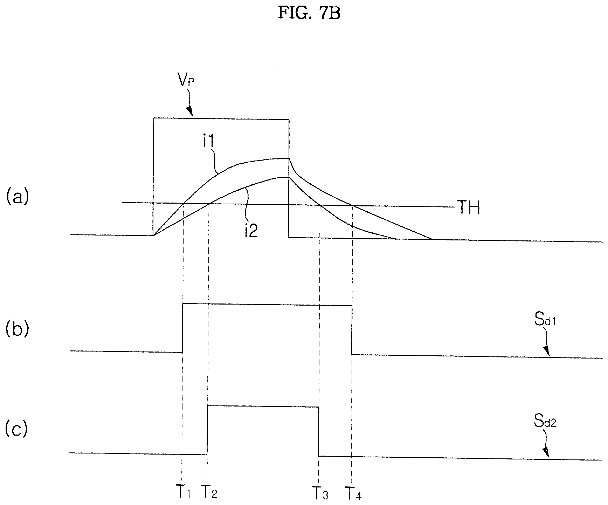

The temperature detector 400 may detect temperature information based on current i flowing in the resistor element 420 or Rᵥ.
(a) of FIG. 7B shows current waveforms i1 and i2 flowing in the resistor element 420 or Rᵥ when the pulse signal Vₚ is applied to the first coil Lᵣ₁.

When the filter 442 filters out a threshold Th or less, a digital signal S_{d1} shown in (b) of FIG. 7B may be generated in correspondence with the first current waveform i1 and a digital signal S_{d2} shown in (c) of FIG. 7B may be generated in correspondence with the second current waveform i2.

Since the resistor element 420 or Rᵥ is an NTC thermistor, a resistance value decreases as a temperature increases. Thus, a current level increases.

Accordingly, in case of the first current waveform i1, the temperature is higher as compared to the second current waveform i2.

The controller 170 may receive the digital signal S_{d1} shown in (b) of FIG. 7B or the digital signal S_{d2} shown in (c) of FIG. 7B and sense the temperature according to the pulse width of the digital signal.

That is, the controller 170 may sense a temperature which increases as the pulse width of the digital signal from the temperature detector 400 increases.

The controller 170 may approximately sense the temperature according to the pulse width of the digital signal from the temperature detector 400.

The controller 170 may perform control to continuously operate the second coil Lᵣ₂ and to repeatedly apply the pulse signal to the first coil Lᵣ₁, upon heating the cooking vessel 195.

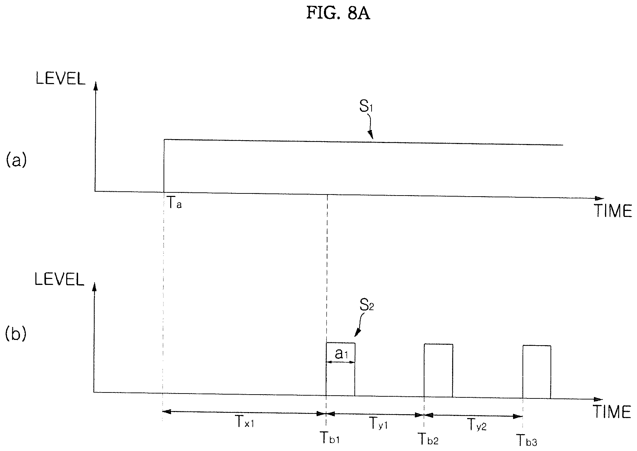

The controller 170 may perform control to change the width of the pulse signal of the first coil Lᵣ₁ or to change the time for applying the pulse signal according to the operation time of the second coil Lᵣ₂ or the temperature of the cooking vessel 195. This will be described with reference to FIGS. 8A to 8B.

FIGS. 8A to 8B show the state in which a high-level signal is applied such that the second coil Lᵣ₂ continuously operates and a pulse signal is repeatedly applied to the first coil Lᵣ₁ after operation of the second coil Lᵣ₂, under control of the controller 170.

The controller 170 performs control to automatically sense a temperature at a predetermined time after a heating time or upon manipulation of the input unit 125.

The controller 170 may perform control to increase the pulse width of the pulse signal for sensing the temperature as the heating time increases.

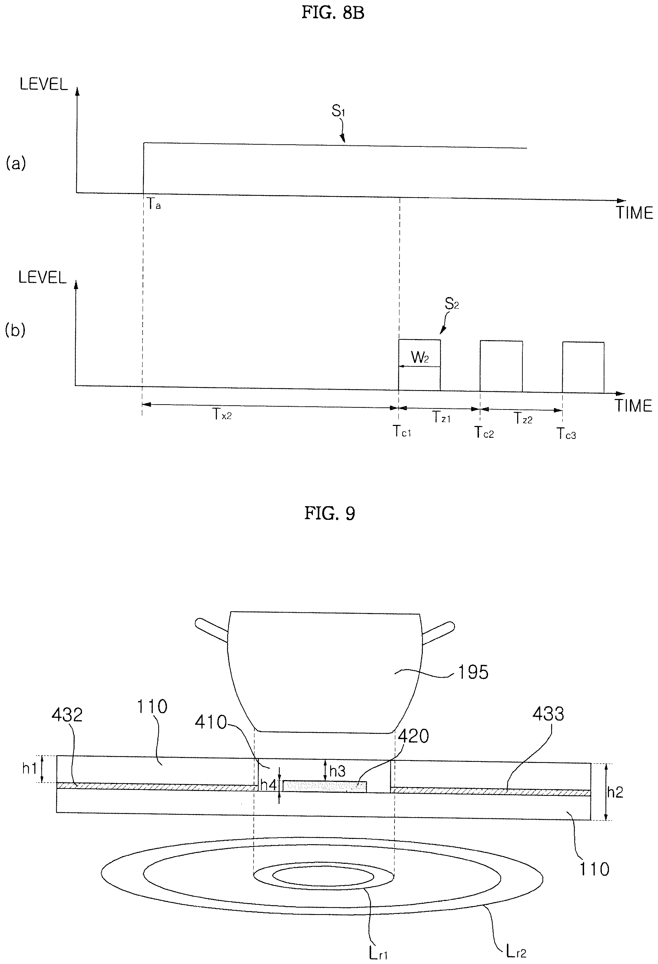

That is, as shown in FIG. 8B, when a pulse signal for sensing the temperature is applied later as compared to FIG. 8A, the controller may perform control to further increase the pulse width of the pulse signal for sensing the temperature in consideration of increase in pulse width. Accordingly, it is possible to accurately sense the temperature.

The controller 170 may perform control to sequentially increase the pulse width upon repeatedly applying the pulse for sensing the temperature to the first coil Lᵣ₁.

The controller 170 may change the pulse width of the pulse signal applied to the first coil Lᵣ₁ in consideration of the sensed temperature, after sensing the temperature.

For example, when the sensed temperature increases, the controller may perform control to increase the pulse width.

FIG. 9 is a side view of an induction cooking apparatus according to another embodiment of the present invention.

Referring to the figure, the cooking apparatus 100 of FIG. 9 may include a plate 110, a first coil Lᵣ₁ disposed under the plate 110, a second coil Lᵣ₂ disposed under the plate 110 and around the first coil Lᵣ₁, a metal member 410 disposed in the plate 110, and a temperature detector 400 disposed in the metal member 410 and including a resistor element 420 or Rᵥ having a resistance value changed according to the temperature of the cooking vessel 195 induction-heated by the second coil Lᵣ₂.

The cooking apparatus of FIG. 9 is similar to that of FIG. 5 but is different therefrom in that the metal member410 is not disposed on the plate 110 but is disposed in the plate 110 and the resistor element 420 or Rᵥ is disposed in the metal member 410.

The height h4 of the resistor element 420 or Rᵥ is greater than a distance h3 between the surface of the metal member 410 and the resistor element 420 or Rᵥ.

The conductive lines 432 and 433 may be electrically connected to both ends of the metal member 410.

Through the resistor element 420 or Rᵥ of the structure of FIG. 9, temperature sensing described with reference to FIGS. 6A to 8B may be performed.

According to an embodiment of the present invention, an induction cooking apparatus includes a plate, a first coil disposed under the plate, a second coil disposed under the plate and around the first coil, and a temperature detector disposed on the plate and including a resistor element having a resistance value changed according to a temperature of a cooking vessel induction-heated by the second coil. Therefore, it is possible to conveniently detect the temperature of the cooking vessel in the induction cooking apparatus.

By displaying the temperature information detected by the temperature detector on the display, it is possible to increase user convenience.

By receiving temperature information detected by the temperature detector and performing control to operate the second coil according to the temperature information, it is possible to cook food according to the temperature of the cooking vessel.

According to another aspect of the present invention, there is disposed an induction cooking apparatus including a plate, a first coil disposed under the plate, a second coil disposed under the plate and around the first coil, a metal member disposed in the plate, and a temperature detector disposed in the metal member and including a resistor element having a resistance value changed according to a temperature of a cooking vessel induction-heated by the second coil. Therefore, it is possible to conveniently detect the temperature of the cooking vessel in the induction cooking apparatus.

In the induction cooking apparatus of the present invention, since the heater disposed under the plate is used, flame is not generated and thus stability is high.

In addition, since the heater, more particularly, the induction heating coil, is not directly heated, it is possible to continuously supply high-frequency current. Therefore, high energy efficiency can be obtained and a heating time can be reduced.

The motor driving apparatus and the home appliance including the same according to the present invention should not be limited to configurations and methods of the above-described embodiments, and all or some of the embodiments may be selectively combined with one another to achieve various alterations.

The method of driving the motor or the method of operating the home appliance according to the present invention may be implemented as code that can be written to a processor-readable recording medium and can thus be read by a processor. The processor-readable recording medium may be any type of recording device in which data can be stored in a processor-readable manner.

## Claims

1. An induction cooking apparatus (100) comprising:
a plate (110);
two metal members (410) disposed on the plate (110);
a first coil (Lr1) disposed under the plate (110);
a second coil (Lr2) disposed under the plate (110) and around the first coil (Lr1); and
a temperature detector (400) disposed on the plate (110) and including a resistor element (420, Rv) having a resistance value changed according to a temperature of a cooking vessel which, in use, is (195) induction-heated by the second coil (Lr2),
**characterized in that**:
the resistor element (420, Rv) is disposed between the two metal members (410), and the cooking vessel (195) is placeable on the resistor element (420 or Rv), whereby the first coil (Lr1) intermittently operates to sense the temperature of the cooking vessel (195) based on current flowing in the resistor element.

2. The induction cooking apparatus according to claim 1, wherein the resistor element (420, Rv) is electrically connected to the metal member (410),
wherein conductive lines (432, 433) are connected to both ends of the two metal members (410).

3. The induction cooking apparatus according to claim 1, wherein the cooking vessel (195) is heated by the second coil (Lr2).

4. The induction cooking apparatus according to claim 1, 2, or 3, wherein the resistor element (420, Rv) includes a negative temperature coefficient, NTC, thermistor.

5. The induction cooking apparatus according to any one of claims 1 to 4, further comprising a controller (170) to perform control to flow current in the first coil (Lr1) or the second coil (Lr2).

6. The induction cooking apparatus according to claim 5, further comprising a display (180),
wherein the controller (170) is configured to receive temperature information detected by the temperature detector (400) and to perform control to display the temperature information on the display (180).

7. The induction cooking apparatus according to claim 5, or 6, wherein the controller (170) is configured to receive temperature information detected by the temperature detector (400) and to perform control to operate the second coil (Lr2) according to the temperature information.

8. The induction cooking apparatus according to claim 5, 6, or 7, wherein the temperature detector (400) includes:
a filter (442) connected to the resistor element (420, Rv), for filtering current flowing in the resistor element (420, Rv); and
a converter (444) to convert a current value filtered by the filter (442) into a digital signal, wherein the controller (170) receives the converted digital signal as the temperature information.

9. The induction cooking apparatus according to any one of claims 5 to 8, wherein the controller (170) is configured to perform control to apply a pulse signal to the first coil (Lr1) and to detect the temperature of the cooking vessel based on current flowing in the resistor element (420, Rv) in correspondence with the pulse signal.

10. The induction cooking apparatus according to any one of claims 5 to 9, wherein the controller (170) is configured to perform control to continuously operate the second coil and to repeatedly apply a pulse signal to the first coil (Lr1), upon heating the cooking vessel.

11. The induction cooking apparatus according to claim 10, wherein the controller (170) is configured to perform control to change a width of the pulse signal of the first coil (Lr1) or a time for applying the pulse signal, according to an operation time of the second coil (Lr2) or the temperature of the cooking vessel.

## Patentansprüche

1. Induktionskochvorrichtung (100) mit:
einer Platte (110);
zwei Metallelementen (410), die auf der Platte (110) angeordnet sind;
einer ersten Spule (Lr1), die unter der Platte (110) angeordnet ist;
einer zweiten Spule (Lr2), die unter der Platte (110) und um die erste Spule (Lr1) angeordnet ist; und
einem Temperaturfühler (400), der auf der Platte (110) angeordnet ist und ein Widerstandselement (420, Rv) mit einem Widerstandswert aufweist, der entsprechend einer Temperatur eines Kochgefäßes (195) geändert wird, das im Gebrauch durch die zweite Spule (Lr2) induktionserwärmt wird,
**dadurch gekennzeichnet, dass**:
das Widerstandselement (420, Rv) zwischen den beiden Metallelementen (410) angeordnet ist und das Kochgefäß (195) auf dem Widerstandselement (420 oder Rv) anordenbar ist,
wobei die erste Spule (Lr1) intermittierend arbeitet, um die Temperatur des Kochgefäßes (195) beruhend auf einem im Widerstandselement fließenden Strom zu erfassen.

2. Induktionskochvorrichtung nach Anspruch 1, wobei das Widerstandselement (420, Rv) elektrisch mit dem Metallelement (410) verbunden ist,
wobei leitfähige Leitungen (432, 433) mit beiden Enden der beiden Metallelemente (410) verbunden sind.

3. Induktionskochvorrichtung nach Anspruch 1, wobei das Kochgefäß (195) durch die zweite Spule (Lr2) erwärmt wird.

4. Induktionskochvorrichtung nach Anspruch 1, 2, oder 3, wobei das Widerstandselement (420, Rv) einen Heißleiter, NTC, aufweist.

5. Induktionskochvorrichtung nach einem der Ansprüche 1 bis 4, die ferner eine Steuereinrichtung (170) aufweist, um eine Steuerung des Stromflusses in der ersten Spule (Lr1) oder der zweiten Spule (Lr2) durchzuführen.

6. Induktionskochvorrichtung nach Anspruch 5, die ferner eine Anzeige (180) aufweist, wobei die Steuereinrichtung (170) konfiguriert ist, durch den Temperaturfühler (400) erfasste Temperaturinformationen zu empfangen und eine Steuerung durchzuführen, um die Temperaturinformationen auf der Anzeige (180) anzuzeigen.

7. Induktionskochvorrichtung nach Anspruch 5, oder 6, wobei die Steuereinrichtung (170) konfiguriert ist, durch den Temperaturfühler (400) erfasste Temperaturinformationen zu empfangen und eine Steuerung durchzuführen, um die zweite Spule (Lr2) gemäß den Temperaturinformationen zu betreiben.

8. Induktionskochvorrichtung nach Anspruch 5, 6, oder 7, wobei der Temperaturfühler (400) aufweist:
ein Filter (442), das mit dem Widerstandselement (420, Rv) zum Filtern des im Widerstandselement (420, Rv) fließenden Stroms verbunden ist; und
einen Wandler (444), um einen durch das Filter (442) gefilterten Stromwert in ein digitales Signal umzuwandeln, wobei die Steuereinrichtung (170) das umgewandelte digitale Signal als die Temperaturinformationen empfängt.

9. Induktionskochvorrichtung nach einem der Ansprüche 5 bis 8, wobei die Steuereinrichtung (170) konfiguriert ist, eine Steuerung durchzuführen, um ein Impulssignal an die erste Spule (Lr1) anzulegen und die Temperatur des Kochgefäßes beruhend auf dem im Widerstandselement (420, Rv) entsprechend dem Impulssignal fließenden Strom zu erfassen.

10. Induktionskochvorrichtung nach einem der Ansprüche 5 bis 9, wobei die Steuereinrichtung (170) konfiguriert ist, beim Erwärmen des Kochgefäßes eine Steuerung durchzuführen, um die zweite Spule kontinuierlich zu betreiben und wiederholt ein Impulssignal an die erste Spule (Lr1) anzulegen.

11. Induktionskochvorrichtung nach Anspruch 10, wobei die Steuereinrichtung (170) konfiguriert ist, eine Steuerung durchzuführen, um eine Breite des Impulssignals der ersten Spule (Lr1) oder eine Zeit des Anlegens des Impulssignals entsprechend einer Betriebszeit der zweiten Spule (Lr2) oder der Temperatur des Kochgefäßes zu ändern.

## Revendications

1. Appareil de cuisson à induction (100), comprenant :
une plaque (110) ;
deux éléments métalliques (410) disposes sur la plaque (110) ;
une première bobine (Lr1) disposée sous la plaque (110) ;
une deuxième bobine (Lr2) disposée sous la plaque (110) et autour de la première bobine (Lr1) ; et
un détecteur de température (400) disposé sur la plaque (110) et comprenant un élément de résistance (420, Rv) dont la valeur de résistance varie en fonction de la température d'un récipient de cuisson (195), lequel est en cours d'utilisation chauffé par induction par la deuxième bobine (Lr2), **caractérisé en ce que** :
l'élément de résistance (420, Rv) est disposé entre les deux éléments métalliques (410), et le récipient de cuisson (195) peut être mis en place sur l'élément de résistance (420 ou Rv), la première bobine (Lr1) fonctionnant ainsi de manière intermittente pour détecter la température du récipient de cuisson (195) sur la base du courant circulant dans l'élément de résistance.

2. Appareil de cuisson à induction selon la revendication 1, où l'élément de résistance (420, Rv) est relié électriquement à l'élément métallique (410),
où des lignes conductrices (432, 433) sont reliées aux deux extrémités des deux éléments métalliques (410).

3. Appareil de cuisson à induction selon la revendication 1, où le récipient de cuisson (195) est chauffé par la deuxième bobine (Lr2).

4. Appareil de cuisson à induction selon la revendication 1, la revendication 2 ou la revendication 3, où l'élément de résistance (420, Rv) comprend une thermistance à coefficient de température négatif CTN.

5. Appareil de cuisson à induction selon l'une des revendications 1 à 4, comprenant en outre un contrôleur (170) destiné à commander la circulation de courant dans la première bobine (Lr1) ou la deuxième bobine (Lr2).

6. Appareil de cuisson à induction selon la revendication 5, comprenant en outre un écran (180),
où le contrôleur (170) est prévu pour recevoir une information de température détectée par le détecteur de température (400) et pour commander l'affichage à l'écran (180) de l'information de température.

7. Appareil de cuisson à induction selon la revendication 5 ou la revendication 6, où le contrôleur (170) est prévu pour recevoir une information de température détectée par le détecteur de température (400) et pour commander le fonctionnement de la deuxième bobine (Lr2) en fonction de l'information de température.

8. Appareil de cuisson à induction selon la revendication 5, la revendication 6 ou la revendication 7, où le détecteur de température (400) comprend :
un filtre (442) relié à l'élément de résistance (420, Rv), destiné à filtrer le courant circulant dans l'élément de résistance (420, Rv) ; et
un convertisseur (444) destiné à convertir en un signal numérique une valeur de courant filtré par le filtre (442), le contrôleur (170) recevant le signal numérique converti en tant qu'information de température.

9. Appareil de cuisson à induction selon l'une des revendications 5 à 8, où le contrôleur (170) est prévu pour commander l'application d'un signal d'impulsion sur la première bobine (Lr1) et pour détecter la température du récipient de cuisson sur la base du courant circulant dans l'élément de résistance (420, Rv) en correspondance avec le signal d'impulsion.

10. Appareil de cuisson à induction selon l'une des revendications 5 à 9, où le contrôleur (170) est prévu pour commander un fonctionnement continu de la deuxième bobine et pour appliquer de manière répétée un signal d'impulsion sur la première bobine (Lr1), par chauffage du récipient de cuisson.

11. Appareil de cuisson à induction selon la revendication 10, où le contrôleur (170) est prévu pour commander la modification de la largeur du signal d'impulsion de la première bobine (Lr1) ou du temps d'application du signal d'impulsion, en fonction d'un temps de fonctionnement de la deuxième bobine (Lr2) ou de la température du récipient de cuisson.
